# DEMANDE DE BREVET EUROPEEN

(11) **EP 4 544 901 A1**
(43) Date de publication de la demande: **30.04.2025**
(21) Numéro de dépôt: 24205149.8
(22) Date de dépôt: 08.10.2024
(51) Int. Cl.: A01D 84/00

(54) **MACHINE DE FENAISON AVEC CONVOYEURS**

(30) Priorité: 23.10.2023 FR 2311472
(71) Demandeur: Kuhn SAS, 67700 Saverne (FR)
(72) Inventeur: GANTZER, Christian, 57915 WOUSTVILLER (FR); ROTH, Elodie, 67500 HAGUENAU (FR); ROOS, Eric, 67330 NIEDERSOULTZBACH (FR)

(57) **Abrégé**

Machine de fenaison comportant deux convoyeurs, chacun configuré pour déplacer un produit dans une direction de convoyage transversale au sens d'avance, dans un premier ou un deuxième sens de convoyage et pour être entrainé à une vitesse respective, au moins un convoyeur pouvant être déplacé sensiblement suivant la direction de convoyage, de sorte que les convoyeurs peuvent être placés dans au moins une configuration latérale, dans laquelle le produit est déposé par un convoyeur aval et dans une configuration centrale. Lorsque les convoyeurs sont placés dans la configuration latérale, la vitesse d'au moins un des convoyeurs est automatiquement réglée, de sorte que la vitesse du convoyeur aval soit supérieure à celle du ou des autres convoyeurs.

## Description

L'invention concerne le domaine du machinisme agricole et porte sur une machine agricole de fenaison, et plus particulièrement sur une machine équipée d'au moins deux convoyeurs de déplacement transversal d'un produit végétal.

L'innovation vise plus particulièrement une machine agricole de fenaison destinée à être déplacée dans un sens d'avance et comportant au moins deux convoyeurs, chacun étant configuré pour déplacer un produit dans une direction de convoyage orientée transversalement au sens d'avance, pouvant déplacer le produit au choix dans un premier sens de convoyage et/ou dans un deuxième sens de convoyage, et pouvant être entrainé à une vitesse respective, au moins un convoyeur pouvant être déplacé sensiblement suivant la direction de convoyage, de sorte que les convoyeurs peuvent être placés dans au moins une configuration latérale, dans laquelle tous les convoyeurs sont accolés, les sens de convoyage de tous les convoyeurs sont identiques, et dans laquelle le produit est déposé par un convoyeur aval, les convoyeurs pouvant également être placés dans une configuration centrale.

La machine décrite dans le document US8833044A1 correspond à la description ci-dessus. Cette machine présente toutefois un inconvénient lorsque les convoyeurs occupent la configuration latérale : le convoyeur aval reçoit non seulement du produit provenant du dispositif de transfert associé, mais aussi du convoyeur amont. Le convoyeur aval, ainsi davantage chargé en produit que le convoyeur amont, présente plus de risques de pertes de produit et de bourrages, pouvant ainsi induire un andain irrégulier, voire l'arrêt du travail et donc une perte de temps et de rentabilité.

La présente innovation a pour but de pallier ces problèmes et vise notamment à mieux répartir le produit sur la ligne de convoyeurs.

A cet effet, l'invention propose que pour une machine agricole de fenaison telle qu'évoquée ci-dessus, lorsque les convoyeurs sont placés dans la ou chaque configuration latérale, la vitesse d'au moins un convoyeur soit réglée automatiquement de sorte que la vitesse du convoyeur aval soit supérieure à celle du ou des autres convoyeurs.

L'invention sera mieux comprise grâce à la description ci-après, qui se rapporte à une réalisation préférée, donnée à titre d'exemple non limitatif et expliquée avec référence aux dessins schématiques annexés, dans lesquels :
[Fig. 1] représente, en vue de dessus simplifiée, une machine de fenaison selon la réalisation préférée de l'invention, avec les convoyeurs en configuration latérale droite ;
[Fig. 2] représente une vue de dessus simplifiée de la machine de la figure 1 avec des convoyeurs en configuration centrale ;
[Fig. 3] représente une vue de côté simplifiée de la machine de la figure 1 en mode de transport ;
[Fig. 4] représente, en vue de dessus simplifiée, une machine de fenaison selon une deuxième variante de réalisation de l'invention, avec les convoyeurs en configuration latérale gauche ;
[Fig. 5] représente une vue de dessus simplifiée d'une machine de fenaison selon une troisième variante de réalisation de l'invention, attelée à l'arrière d'un tracteur, avec des convoyeurs en configuration centrale ;
[Fig. 6] représente un schéma de commande simplifié d'une machine de fenaison selon une première variante de réalisation de l'invention ;
[Fig. 7] représente un schéma de commande simplifié de la machine de la figure 1.

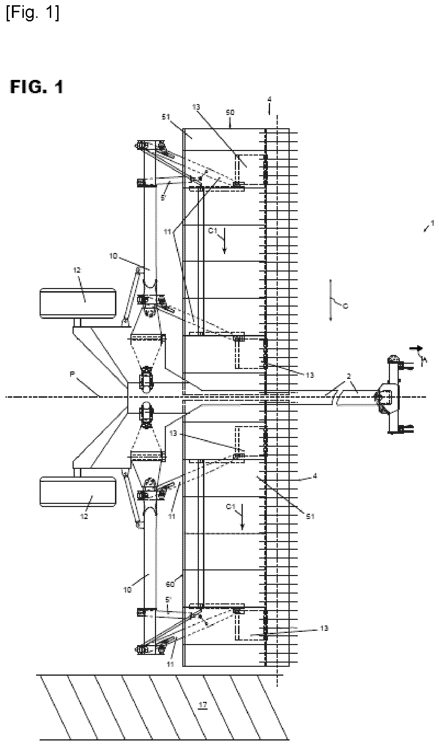

La figure 1 illustre une machine (1) agricole de fenaison destinée à être déplacée dans un sens d'avance (A) et comportant au moins deux convoyeurs (50, 60, 70, 80). La machine (1) comporte également un châssis (2), auquel sont reliés les convoyeurs (50, 60, 70, 80). Le châssis (2) présente un plan médian (P). De préférence, le châssis (2) et/ou la machine (1) présente(nt) une symétrie orthogonale par rapport au plan médian (P).

Dans la présente description, les notions « avant », « arrière », « latéral », « gauche », « droite », « devant » et « derrière » sont définies en regardant dans le sens d'avance (A). De la même manière, les notions « intérieur » et « extérieur » sont définies par rapport au plan médian (P). Un élément intérieur est plus proche du plan médian (P) qu'un élément extérieur.

Chaque convoyeur (50, 60, 70, 80) est configuré pour déplacer un produit dans une direction de convoyage (C) orientée transversalement au sens d'avance (A). Préférentiellement, la ou chaque direction de convoyage (C) est orthogonale au sens d'avance (A). Alternativement, la ou les directions de convoyage (C) des convoyeurs (50, 60, 70, 80) peuvent former un angle allant jusqu'à 30° avec la direction d'avance (A), notamment dans un plan horizontal autorisant également un déplacement transversal du produit. Les directions de convoyage (C) des convoyeurs (50, 60, 70, 80) sont préférentiellement parallèles. Chaque convoyeur (50, 60, 70, 80) pourrait cependant présenter une direction de convoyage (C) propre, de sorte que les directions de convoyage (C) de convoyeurs (50, 60, 70, 80) adjacents forment un angle.

En outre, les convoyeurs (50, 60, 70, 80) sont préférentiellement alignés suivant la direction de convoyage (C), réduisant la longueur de la machine (1) dans le sens d'avance (A) et permettant que le produit soit déplacé d'un convoyeur (50, 60, 70, 80) à un autre, avec moins de risques de pertes de produit. Chaque convoyeur (50, 60, 70, 80) peut déplacer le produit au choix entre un premier sens (C1) de convoyage et un deuxième sens (C2) de convoyage. Chaque convoyeur (50, 60, 70, 80) peut déplacer le produit dans le premier sens (C1) ou dans le deuxième sens (C2). Le premier sens (C1) est opposé au deuxième sens (C2). On convient que le premier sens (C1) est dirigé de la gauche vers la droite.

Lorsque le produit est déposé par un convoyeur (50, 60, 70, 80), le produit forme un andain (17) sur le sol grâce au déplacement de la machine (1) dans le sens d'avance (A). L'andain (17) est donc longitudinal au sens d'avance (A). Lorsqu'un convoyeur (50, 60, 70, 80) déplace le produit dans le premier sens (C1), il peut former un andain (17) à sa droite.

Ainsi qu'il ressort de la figure 1 notamment, un dispositif de transfert (4) est associé à chaque convoyeur (50, 60, 70, 80). Chaque dispositif de transfert (4) est destiné à transférer le produit au convoyeur (50, 60, 70, 80) associé. Préférentiellement, chaque dispositif de transfert (4) est de longueur équivalente au convoyeur (50, 60, 70, 80) associé suivant la direction de convoyage (C). Chaque dispositif de transfert (4) peut notamment être réalisé par au moins une barre de fauche et/ou au moins un rouleau de ramassage. Le produit peut notamment être végétal, tel que de l'herbe ou de la paille. Lorsque le dispositif de transfert (4) comprend une barre de fauche, il permet de faucher des végétaux sur pieds. Lorsque le dispositif de transfert (4) comprend un rouleau de ramassage, il permet de déplacer des végétaux préalablement fauchés.

Au moins un convoyeur (50, 60, 70, 80) peut être déplacé sensiblement suivant la direction de convoyage (C). Préférentiellement, tous les convoyeurs (50, 60, 70, 80) peuvent être déplacés sensiblement suivant la direction de convoyage (C). Afin de pouvoir centrer l'andain (17) sur le plan médian (P), chaque convoyeur (50, 60, 70, 80) peut être déplacé suivant la direction de convoyage (C) par rapport au châssis (2) par un actionneur de déplacement (5). Il est convenu qu'un premier convoyeur (50) est situé du côté gauche et qu'un deuxième convoyeur (60) est situé du côté droit de la machine (1), vu suivant le sens d'avance (A). Préférentiellement, chacun des premier et deuxième convoyeurs (50, 60) est situé d'un côté du châssis (2). Grâce au déplacement d'au moins un convoyeur (50, 60, 70, 80) suivant la direction de convoyage (C), les convoyeurs (50, 60, 70, 80) peuvent être placés dans au moins une configuration latérale, dans laquelle tous les convoyeurs (50, 60, 70, 80) sont accolés. Le déplacement d'au moins un convoyeur (50, 60, 70, 80) permet également d'adapter la machine (1) à différentes conditions, notamment au volume et/ou à la longueur du produit, mais aussi à la machine de ramassage d'andains (17).

Dans la ou chaque configuration latérale, les sens (C1, C2) de convoyage de tous les convoyeurs (50, 60, 70, 80) sont identiques. Dans la ou chaque configuration latérale, le produit est déposé par un convoyeur (50, 60, 70, 80) aval. Le convoyeur (50, 60, 70, 80) aval est le plus proche de l'andain (17). Quelle que soit la configuration latérale, la machine (1) ne compte qu'un seul convoyeur (50, 60, 70, 80) aval. En configuration latérale des convoyeurs (50, 60, 70, 80), le convoyeur (50, 60, 70, 80) amont est situé du côté opposé de l'andain (17). Aussi, dans la configuration latérale des convoyeurs (50, 60, 70, 80), le convoyeur (50, 60, 70, 80) aval reçoit du produit provenant du convoyeur (50, 60, 70, 80) amont.

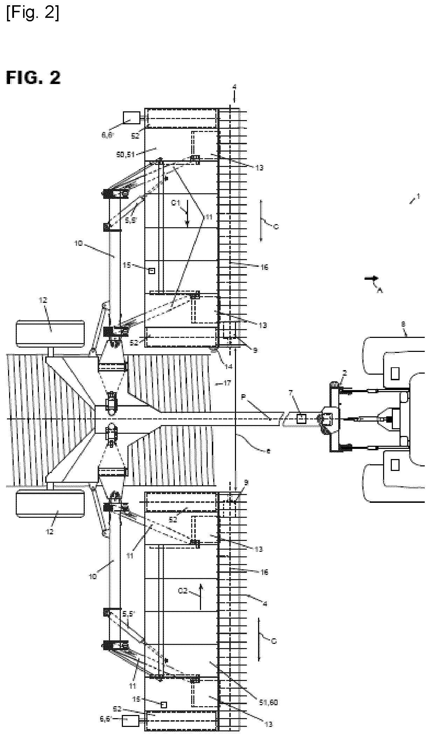

Ainsi qu'il ressort de la figure 2, les convoyeurs (50, 60, 70, 80) peuvent également être placés dans une configuration centrale. Dans la configuration centrale, les premier (50) et deuxième (60) convoyeurs sont plus éloignés l'un de l'autre que dans la ou chaque configuration latérale. Les convoyeurs (50, 60, 70, 80) les plus proches du plan médian (P) sont éloignés l'un de l'autre par un espacement central (e). Autrement dit, dans la configuration centrale, les convoyeurs (50, 60, 70, 80) les plus proches du plan médian (P) ne sont pas accolés.

Dans la configuration centrale des convoyeurs (50, 60, 70, 80), les sens (C1, C2) de convoyage des convoyeurs (50, 60, 70, 80) sont dirigés en direction du plan médian (P). De cette manière, le produit est déposé entre le premier convoyeur (50) et le deuxième convoyeur (60). Dans la configuration centrale, le sens (C1, C2) du ou des convoyeur(s) (50, 60, 70, 80) situé(s) d'un côté du plan médian (P) est opposé au sens (C1, C2) du ou des convoyeur(s) (50, 60, 70, 80) situés de l'autre côté du plan médian (P).

L'espacement central (e) correspond ainsi à la distance séparant les convoyeurs (50, 60, 70, 80) entre lesquels l'andain (17) est déposé, le cas échéant. Dans les réalisations des figures 2, 4 et 6, l'espacement central (e) correspond à la distance séparant le premier convoyeur (50) du deuxième convoyeur (60). On parle de deux convoyeurs (50, 60, 70, 80) accolés lorsque l'espacement central (e) est tel qu'aucun andain (17) n'est formé entre eux. L'espacement central (e) se mesure suivant la direction de convoyage (C). Dans la ou chaque configuration latérale, l'espacement central (e) est sensiblement nul. Lorsque tous les convoyeurs (50, 60, 70, 80) sont accolés, il n'y a pas d'espace entre deux convoyeurs (50, 60, 70, 80) adjacents. De préférence, l'espacement central (e) est réglé par l'actionneur de déplacement (5).

Les différentes configurations des convoyeurs (50, 60, 70, 80) permettent d'adapter la machine (1) aux différentes conditions de travail, par exemple au volume et/ou à la longueur du produit. Les différentes configurations des convoyeurs (50, 60, 70, 80) peuvent également permettre d'adapter l'andain (17) et notamment sa largeur, en fonction de la machine de ramassage d'andains (17), telle qu'une presse ou une ensileuse notamment.

Ainsi qu'il ressort de la figure 2, la machine (1) est de préférence attelée à un tracteur (8). Le tracteur (8) permet de déplacer la machine (1) dans le sens d'avance (A). Il permet également d'entraîner la machine (1), notamment grâce à sa prise de force et son circuit hydraulique. Alternativement, la machine (1) peut être un automoteur. L'utilisateur de la machine (1) est le conducteur du tracteur (8) ou de l'automoteur. Dans les deux cas, chaque convoyeur (50, 60, 70, 80) est préférentiellement relié au châssis (2) par un bras (10). Le plan médian (P) est préférentiellement vertical. Le plan médian (P) est également préférentiellement parallèle à la direction d'avance (A).

Préférentiellement, chaque convoyeur (50, 60, 70, 80) comporte un tapis (51) et au moins deux cylindres (52), via lesquels le tapis (51) est tendu. Le tapis (51) de chaque convoyeur (50, 60, 70, 80) est entrainé par au moins un des cylindres (52). Les au moins deux cylindres (52) d'un tapis (51) sont entrainés autour d'axes parallèles au sens d'avance (A) en vue de dessus. Le déplacement du produit étant principalement horizontal, les axes des cylindres (52) sont sensiblement horizontaux. Alternativement, chaque convoyeur (50, 60, 70, 80) peut être réalisé par une vis sans fin entrainée en rotation autour d'un axe transversal à la direction d'avance (A) et sensiblement horizontal.

Afin de faire varier notamment l'emplacement et la forme de l'andain (17), chaque convoyeur (50, 60, 70, 80) peut être entrainé à une vitesse respective. Autrement dit, la vitesse de chaque convoyeur (50, 60, 70, 80) peut être réglée individuellement. A cet effet, la vitesse de chaque convoyeur (50, 60, 70, 80) est préférentiellement réglée par une source motrice (6). Dans le cas de convoyeurs (50, 60, 70, 80) à tapis (51), la source motrice (6) est reliée à au moins un cylindre (52). La source motrice (6) pourrait être la prise de force du tracteur (8), à laquelle chaque convoyeur (50, 60, 70, 80) serait relié par une boite de vitesse respective et/ou un inverseur commandable(s). Préférentiellement, chaque convoyeur (50, 60, 70, 80) est associé à une source motrice (6) respective pouvant régler la vitesse de ce convoyeur (50, 60, 70, 80). Préférentiellement, chaque source motrice (6) est un moteur hydraulique (6'). Préférentiellement, les moteurs hydrauliques (6') sont reliés à une pompe (19) hydraulique. La pompe (19) peut faire partie de la machine (1) ou du tracteur (8). Chaque source motrice (6) pourrait aussi être un moteur électrique. Le sens (C1, C2) de convoyage d'un convoyeur (50, 60, 70, 80) est déterminé par la source motrice (6) associée.

Telle que représentée sur les figures 1, 2, 4 et 5, la machine (1) est en mode de travail. On parle des différentes configurations des convoyeurs (50, 60, 70, 80) surtout lorsque la machine (1) est en mode de travail. Ainsi qu'il ressort des figures, chaque dispositif de transfert (4) s'étend préférentiellement sensiblement parallèlement au convoyeur (50, 60, 70, 80) associé. Chaque dispositif de transfert (4) est préférentiellement solidaire du convoyeur (50, 60, 70, 80) associé, de sorte que lorsqu'un convoyeur (50, 60, 70, 80) occupe une configuration déterminée, le dispositif de transfert (4) associé occupe la même configuration. En mode de travail de la machine (1), chaque dispositif de transfert (4) est situé devant le convoyeur (50, 60, 70, 80) associé, facilitant ainsi le transfert de produit dans le sens opposé au sens d'avance (A).

Dans le mode de travail, les dispositifs de transfert (4) récoltent le produit au sol et les convoyeurs (50, 60, 70, 80) s'étendent sensiblement horizontalement et/ou parallèlement au sol. Pour permettre aux dispositifs de transfert (4) et/ou aux convoyeurs (50, 60, 70, 80) de suivre les dénivellations du sol lors du déplacement de la machine (1), chaque bras (10) peut pivoter par rapport au châssis (2) suivant au moins un axe orienté parallèlement au plan médian (P).

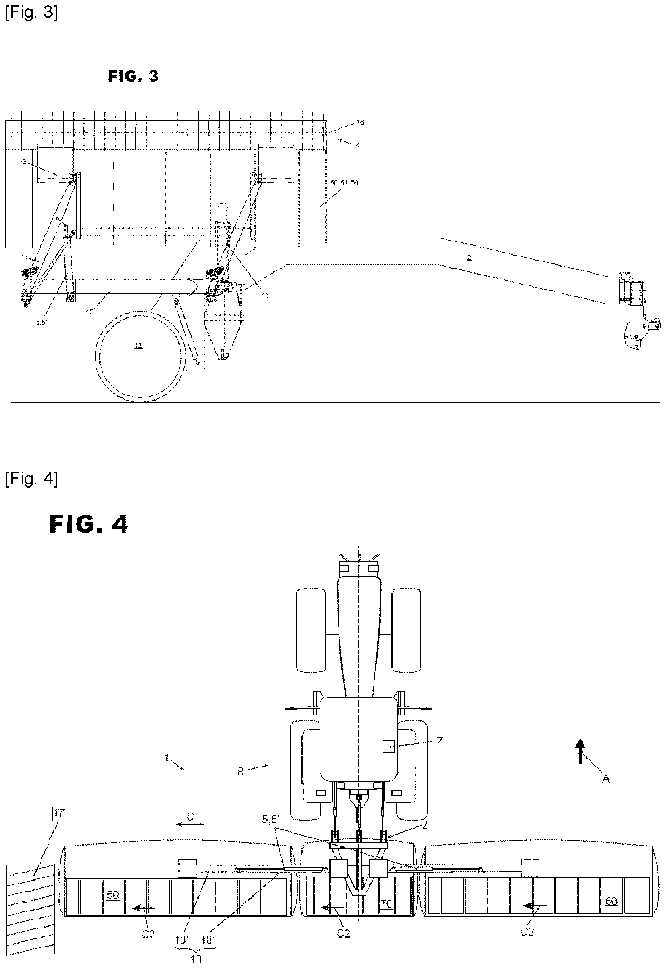

Ainsi qu'il ressort de la figure 3, la machine (1) peut occuper un mode de transport dans lequel les convoyeurs (50, 60, 70, 80) sont orientés au moins sensiblement parallèlement au plan médian (P), réduisant ainsi la largeur de la machine (1). Afin de réduire la hauteur de la machine (1) dans la configuration de transport, les convoyeurs (50, 60, 70, 80) sont préférentiellement orientés parallèlement au sens d'avance (A). Par ailleurs, dans la configuration de transport, les convoyeurs (50, 60, 70, 80) sont situés à une certaine distance du sol pour permettre une vitesse d'avance plus importante sur la route sans abimer la machine (1). Il ressort de ce qui précède que la machine (1) peut occuper au moins un autre mode.

De préférence, la machine (1) peut également occuper un mode de manoeuvre dans lequel les convoyeurs (50, 60, 70, 80) sont légèrement soulevés du sol. Dans le mode de manoeuvre de la machine (1), les convoyeurs (50, 60, 70, 80) sont orientés transversalement au sens d'avance (A). Le mode de manoeuvre est une position intermédiaire des convoyeurs (50, 60, 70, 80) entre les modes de travail et de transport, permettant d'éviter que les convoyeurs (50, 60, 70, 80) n'interfèrent avec le produit au sol. Passer en mode de manoeuvre nécessite moins de temps que de passer en mode de transport.

Selon une caractéristique importante, lorsque les convoyeurs (50, 60, 70, 80) sont placés dans la ou chaque configuration latérale, la vitesse d'au moins un des convoyeurs (50, 60, 70, 80) est automatiquement réglée de sorte que la vitesse du convoyeur (50, 60, 70, 80) aval soit supérieure à celle du ou des autres convoyeurs (50, 60, 70, 80).

Grâce à ces dispositions, en configuration latérale, la vitesse de chaque convoyeur (50, 60, 70, 80) est automatiquement adaptée au volume et/ou à la quantité de produit qu'il doit déplacer par rapport aux autres convoyeurs (50, 60, 70, 80), favorisant ainsi une répartition équitable du produit sur tous les convoyeurs (50, 60, 70, 80) et diminuant avantageusement le risque de bourrage sur la machine (1). De ce fait, la vitesse d'avance de la machine (1) peut être augmentée pour accélérer le chantier agricole tout en réduisant les risques de pertes de produit, d'andains (17) irréguliers et d'arrêt de la machine (1). En outre, le fait que la vitesse des convoyeurs (50, 60, 70, 80) soit réglée automatiquement permet un plus grand confort de conduite, l'utilisateur devant régler un paramètre en moins et risquant de ce fait moins d'erreurs ou d'oublis.

Préférentiellement, lorsque les convoyeurs (50, 60, 70, 80) sont placés dans la ou chaque configuration latérale, la vitesse du convoyeur (50, 60, 70, 80) aval est automatiquement augmentée, par exemple d'une vitesse de 0% à 50% supérieure à celle du convoyeur (50, 60, 70, 80) amont. Alternativement ou additionnellement, la vitesse du convoyeur (50, 60, 70, 80) amont peut être diminuée. De manière simple, lorsque les convoyeurs (50, 60, 70, 80) sont placés dans la ou chaque configuration latérale, seule la vitesse du convoyeur (50, 60, 70, 80) aval est augmentée.

En outre, lorsque les convoyeurs (50, 60, 70, 80) sont placés dans la ou chaque configuration latérale, le sens de convoyage (C1, C2) d'au moins un des convoyeurs (50, 60, 70, 80) est automatiquement réglé de sorte que les sens de convoyage (C1, C2) de tous les convoyeurs (50, 60, 70, 80) soient identiques. Préférentiellement, lorsque les convoyeurs (50, 60, 70, 80) sont placés dans une configuration latérale, les sens de convoyage (C1, C2) de chaque convoyeur (50, 60, 70, 80) sont automatiquement réglés de sorte qu'ils soient identiques. De ce fait, l'utilisateur ne doit régler le sens de convoyage (C1, C2) d'aucun des convoyeurs (50, 60, 70, 80) (lorsque les convoyeurs (50, 60, 70, 80) sont placés dans une configuration latérale), risquant ainsi moins d'erreurs et/ou d'oublis de manipulation et améliorant le confort de conduite de la machine (1). En outre, l'utilisateur s'économise ainsi le temps de réglage, permettant également d'accélérer le chantier agricole.

Dans la réalisation préférée de la figure 1, la machine (1) ne comporte que deux convoyeurs (50, 60, 70, 80), à savoir le premier convoyeur (50) et le deuxième convoyeur (60). Sur la figure 1, le premier convoyeur (50) et le deuxième convoyeur (60) sont accolés et sont dirigés dans le premier sens (C1) de convoyage, de sorte qu'ils occupent une configuration latérale droite. Le produit est ainsi déposé en un andain (17) situé à droite du convoyeur (50, 60, 70, 80) aval, respectivement à droite de la machine (1). Sur la figure 1, le convoyeur (50, 60, 70, 80) aval est le deuxième convoyeur (60). Sur la figure 1, le convoyeur (50, 60, 70, 80) amont est le premier convoyeur (50). Préférentiellement, les convoyeurs (50, 60, 70, 80) peuvent aussi être placés dans une configuration latérale gauche, dans laquelle ils sont accolés et déplacent le produit dans le deuxième sens (C2) de convoyage.

Ainsi, lorsque les convoyeurs (50, 60, 70, 80) sont placés dans la configuration latérale droite, le sens (C1, C2) de convoyage de tous les convoyeurs (50, 60, 70, 80) est automatiquement réglé dans le premier sens (C1). Symétriquement, lorsque les convoyeurs (50, 60, 70, 80) sont placés dans la configuration latérale gauche, le sens (C1, C2) de convoyage de tous les convoyeurs (50, 60, 70, 80) est automatiquement réglé dans le deuxième sens (C2). De ce fait, quelle que soit la configuration latérale sélectionnée, l'utilisateur ne doit pas régler de sens de convoyage (C1, C2) (lorsque les convoyeurs (50, 60, 70, 80) sont placés dans cette configuration latérale), l'utilisateur risquant ainsi moins d'erreur et/ou d'oubli de manipulation et voyant son confort de conduite amélioré. L'utilisateur s'économise aussi le temps de réglage, permettant également d'accélérer le chantier agricole et de rester concentrer sur d'autres tâches, comme la direction à donner au tracteur (8).

Selon une caractéristique intéressante, lorsque les convoyeurs (50, 60, 70, 80) sont placés dans la configuration centrale, au moins les vitesses des convoyeurs (50, 60, 70, 80) les plus proches du plan médian (P) sont automatiquement réglées à une valeur identique inférieure à la vitesse du convoyeur (50, 60) aval en configuration latérale, permettant l'obtention d'un andain régulier et centré. Ainsi, au moins les vitesses du premier convoyeur (50) et du deuxième convoyeur (60) sont automatiquement réglées à une valeur identique. En effet, dans cette configuration centrale, deux convoyeurs (50, 60, 70, 80) déposent du produit entre eux, de sorte qu'une vitesse trop importante d'au moins un de ces convoyeurs (50, 60, 70, 80) peut impliquer un éparpillement et/ou une imbrication hasardeuse du produit provenant de chaque convoyeur (50, 60, 70, 80) et présente donc plus de risques de former un andain (17) hétérogène. Préférentiellement, lorsque les convoyeurs (50, 60, 70, 80) sont placés dans la configuration centrale, les vitesses de tous les convoyeurs (50, 60, 70, 80) sont automatiquement réglées à une valeur identique.

En outre, lorsque les convoyeurs (50, 60, 70, 80) sont placés dans la configuration centrale, au moins les vitesses du premier convoyeur (50) et du deuxième convoyeur (60) sont automatiquement réglées à une valeur inférieure à la vitesse du convoyeur (50, 60, 70, 80) aval en configuration latérale, réduisant avantageusement la consommation de la machine (1) en configuration centrale. Le fait de réduire la vitesse des convoyeurs (50, 60, 70, 80) dans la configuration centrale permet aussi de former des andains (17) plus homogènes, du fait que l'impact des deux flux de produit est moindre. Préférentiellement, lorsque les convoyeurs (50, 60, 70, 80) sont placés dans la configuration centrale, les vitesses de tous les convoyeurs (50, 60, 70, 80) sont automatiquement réglées à une valeur inférieure à la vitesse du convoyeur (50, 60, 70, 80) aval en configuration latérale

Dans la réalisation préférée, lorsque les premier (50) et deuxième (60) convoyeurs sont placés dans la configuration centrale, leurs vitesses sont automatiquement réglées à une valeur identique et inférieure à la vitesse de n'importe lequel des convoyeurs (50, 60, 70, 80) en configuration latérale, réduisant davantage encore la consommation de la machine (1) en configuration centrale et contribuant à un andain (17) plus homogène encore.

De préférence, lorsque les convoyeurs (50, 60, 70, 80) sont placés depuis la configuration centrale dans la ou chaque configuration latérale, la vitesse du convoyeur (50, 60, 70, 80) aval est automatiquement augmentée, par exemple à une vitesse supérieure de 0% à 50% à sa vitesse en configuration centrale.

De plus, lorsque les convoyeurs (50, 60, 70, 80) sont placés dans la configuration centrale, le sens de convoyage (C1, C2) d'au moins un des convoyeurs (50, 60, 70, 80) est automatiquement réglé de sorte que le sens de convoyage (C1, C2) de chacun des convoyeurs (50, 60, 70, 80) soit dirigé en direction du plan médian (P). Préférentiellement, lorsque les convoyeurs (50, 60, 70, 80) sont placés dans une configuration latérale, le sens de convoyage (C1, C2) de chaque convoyeur (50, 60, 70, 80) est automatiquement réglé de sorte qu'il soit dirigé en direction du plan médian (P). Ainsi, l'utilisateur ne doit régler le sens de convoyage (C1, C2) d'aucun des convoyeurs (50, 60, 70, 80) (lorsque les convoyeurs (50, 60, 70, 80) sont placés dans la configuration centrale), évitant ainsi toute erreur et/ou tout oubli de manipulation et améliorant le confort de conduite de la machine (1). Une telle caractéristique permet également d'économiser le temps de réglage, accélérant le chantier agricole et permettant à l'utilisateur de se concentrer sur les autres tâches comme la conduite du tracteur.

Préférentiellement, la machine (1) comporte un contrôleur (7). Le contrôleur (7) est apte à transmettre un signal, afin de contrôler un ou plusieurs paramètres de la machine (1). Le contrôleur (7) peut notamment régler la vitesse d'au moins un convoyeur (50, 60, 70, 80). De la même manière, le contrôleur (7) peut notamment régler le sens de convoyage (C1, C2) d'au moins un convoyeur (50, 60, 70, 80). Le contrôleur (7) est apte à transmettre un signal permettant de régler la vitesse de chacun des convoyeurs (50, 60, 70, 80). Le contrôleur (7) est également apte à transmettre un signal permettant de régler le sens de convoyage (C1, C2) de chacun des convoyeurs (50, 60, 70, 80). Ainsi, l'utilisateur peut contrôler la machine (1) en saisissant ses instructions sur le contrôleur (7) ou sur un terminal transmettant ces instructions au contrôleur (7), facilitant l'utilisation et améliorant l'ergonomie de la machine (1). Le terminal et le contrôleur (7) peuvent former un unique composant. De manière pratique, le contrôleur (7) est avantageusement situé dans la cabine de conduite de la machine (1) automotrice ou du tracteur (8).

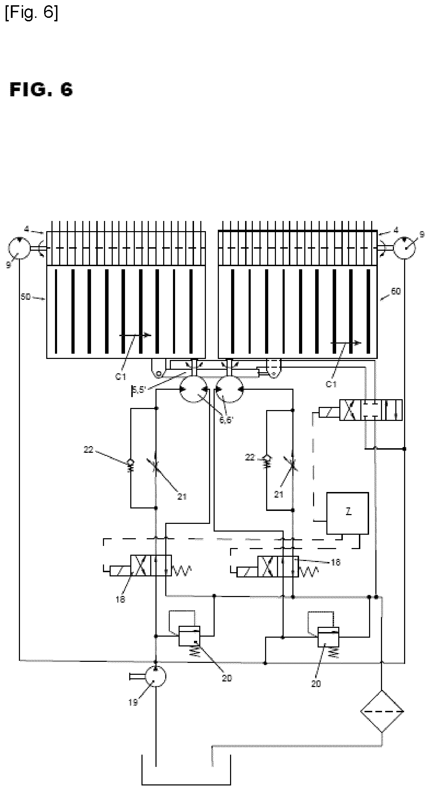

Tel que représenté sur la figure 6, à au moins un convoyeur (50, 60, 70, 80) est associé un distributeur (18) hydraulique. Selon sa position, le ou chaque distributeur (18) hydraulique permet de relier le moteur hydraulique (6') respectif à une pompe (19) hydraulique afin d'entrainer le convoyeur (50, 60, 70, 80) associé de manière à ce qu'il déplace le produit dans le premier ou le deuxième sens de convoyage (C1, C2). Préférentiellement, un distributeur (18) hydraulique est associé à chaque convoyeur (50, 60, 70, 80). Dans une première variante de réalisation illustrée sur la figure 6, la machine (1) ne comporte que deux convoyeurs (50, 60, 70, 80), à chacun desquels sont associés un régulateur de pression (20) et un limiteur de débit (21), aux bornes duquel est branché un clapet anti-retour (22).

Telles que représentées sur la figure 6, les positions des distributeurs (18) correspondent à une configuration latérale droite des convoyeurs (50, 60, 70, 80), ainsi qu'à une vitesse du premier convoyeur (50) inférieure à la vitesse du deuxième convoyeur (60). En effet, le distributeur (18) associé au premier convoyeur (50) dirige l'huile provenant d'une ou de la pompe (19) à travers le limiteur de débit (21) associé, tandis que le distributeur (18) associé au deuxième convoyeur (60) dirige l'huile dans une conduite sans restriction, de sorte que la vitesse du premier convoyeur (50) est inférieure à la vitesse du deuxième convoyeur (60). En outre, tel que représenté sur la figure 6, chaque distributeur (18) dirige l'huile vers le moteur hydraulique (6') associé, de sorte que chacun des premier et deuxième convoyeurs (50, 60) présente le même sens de convoyage, à savoir le premier sens de convoyage (C1).

Ainsi que représenté sur la figure 6, le contrôleur (7) peut modifier la position d'un ou de chaque distributeur (18). Le contrôleur (7) peut aussi contrôler l'actionneur de déplacement (5). Le contrôleur (7) peut donc être configuré de sorte que, lorsque l'utilisateur saisit une instruction (via le contrôleur (7)) pour passer dans une configuration latérale, le contrôleur (7) transmette, préférentiellement simultanément, un signal à l'actionneur de déplacement (5), afin d'accoler les premier et deuxième convoyeurs (50, 60) et un signal aux distributeurs (18) afin que les premier et deuxième convoyeurs (50, 60) présentent des sens (C) identiques et des vitesses différentes. Un avantage de cette première variante de réalisation est que le signal envoyé par le contrôleur (7) peut être électrique ou hydraulique. Ainsi, l'invention peut avantageusement être appliquée, même si le tracteur (8) ne dispose pas d'électronique.

Dans la première variante de réalisation, le contrôleur (7) peut être configuré de sorte que, lorsque l'utilisateur saisit une instruction (via le contrôleur (7)) pour passer dans une configuration centrale, le contrôleur (7) transmette :
- un signal à l'actionneur de déplacement (5), afin d'espacer les premier et deuxième convoyeurs (50, 60) d'un écartement central (e) ;
- un signal pour placer le distributeur (18) associé au deuxième convoyeur (60) de manière à ce que l'huile soit dirigée à travers le limiteur de débit (21) associé et que le moteur hydraulique (6') associé entraine le deuxième convoyeur (60) de sorte qu'il déplace le produit dans le deuxième sens (C2) de convoyage, et
- un signal au distributeur (18) associé au premier convoyeur (50), afin que l'huile soit dirigée à travers le limiteur de débit (21) associé et que le moteur hydraulique (6') associé entraine le deuxième convoyeur (60) de sorte qu'il déplace le produit dans le premier sens (C1) de convoyage. Il s'ensuit que les premier et deuxième convoyeurs (50, 60) sont écartés l'un de l'autre, déplacent le produit dans des sens (C1, C2) de convoyage opposés et présentent des vitesses identiques et moindres que le convoyeur (50, 60, 70, 80) aval en configuration latérale. Il ressort de ce qui précède que dans la première variante de réalisation, le contrôleur (7) est configuré pour régler automatiquement l'espacement central (e), ainsi que les sens (C1, C2) de convoyage et les vitesses des convoyeurs (50, 60, 70, 80) en fonction de leur configuration.

Dans une quatrième variante de réalisation, le contrôleur (7) est configuré de telle sorte qu'à chaque configuration des convoyeurs (50, 60, 70, 80) est associée une commande respective. Notamment, le contrôleur (7) peut être configuré pour présenter une première commande permettant de placer les convoyeurs (50, 60, 70, 80) dans la configuration latérale droite et une deuxième commande permettant de placer les convoyeurs (50, 60, 70, 80) dans la configuration centrale, de sorte qu'une commande permette de placer automatiquement les convoyeurs (50, 60, 70, 80). Préférentiellement, le contrôleur (7) peut également présenter une troisième commande permettant de placer les convoyeurs (50, 60, 70, 80) dans leur configuration latérale gauche. Ainsi, dans la quatrième variante de réalisation, une première commande du contrôleur (7) permet de régler automatiquement l'espacement central (e), les sens (C1, C2) de convoyage et les vitesses des convoyeurs (50, 60, 70, 80) afin de placer les convoyeurs (50, 60, 70, 80) dans la configuration latérale droite. Aussi, dans la quatrième variante de réalisation, une deuxième commande du contrôleur (7) permet de régler automatiquement l'espacement central (e), les sens (C1, C2) de convoyage et les vitesses des convoyeurs (50, 60, 70, 80) afin de placer les convoyeurs (50, 60, 70, 80) dans la configuration centrale. Enfin, dans la quatrième variante de réalisation, une troisième commande du contrôleur (7) permet de régler automatiquement l'espacement central (e), les sens (C1, C2) de convoyage et les vitesses des convoyeurs (50, 60, 70, 80) afin de placer les convoyeurs (50, 60, 70, 80) dans la configuration latérale gauche. De préférence, chacune des première, deuxième et troisième commande est actionnée par un bouton respectif du terminal, respectivement du contrôleur (7), facilitant ainsi particulièrement les changements de configuration des convoyeurs (50, 60, 70, 80).

Il est souligné que dans la variante de la figure 6, chaque régulateur de pression (20) permet d'évacuer l'huile excédentaire lorsqu'elle est dirigée vers le limiteur de débit (21) associé. Un inconvénient de cette variante est que la sollicitation d'un régulateur de pression (20) augmente la consommation de la ou chaque pompe (19) et peut provoquer un échauffement de l'huile, pouvant réduire sa qualité.

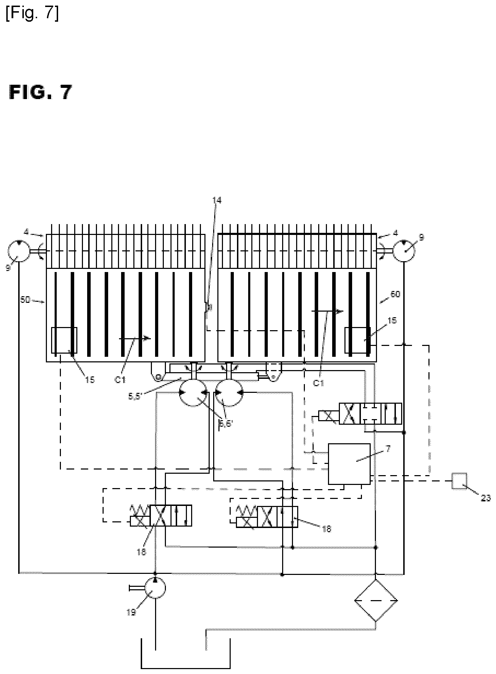

Ainsi que représenté sur la figure 7, le contrôleur (7) est préférentiellement une unité de commande électronique (ECU). Le contrôleur (7) est ainsi apte à recevoir un signal représentatif de la configuration des convoyeurs (50, 60, 70, 80). Le signal représentatif de la configuration des convoyeurs (50, 60, 70, 80) peut notamment comprendre un signal représentatif du sens (C1, C2) de convoyage de chaque convoyeur (50, 60, 70, 80) et un signal représentatif de l'espacement central (e). Alternativement ou additionnellement, le signal représentatif de la configuration des convoyeurs (50, 60, 70, 80) peut comprendre un signal représentatif de la vitesse de chaque convoyeur (50, 60, 70, 80), et/ou un signal représentatif de comparaisons de ces vitesses. De manière pratique, les signaux reçus et émis par le contrôleur (7) sont conformes à la norme ISOBUS (ISO 11783).

La machine (1) peut comporter un capteur de distance (14) apte à transmettre au contrôleur (7) un signal représentatif de l'espacement central (e). Le signal représentatif de l'espacement central (e) peut être émis par le capteur de distance (14), lorsque les convoyeurs (50, 60, 70, 80) concernés sont accolés et/ou lorsque l'espacement central (e) dépasse une valeur seuil. La valeur seuil pour l'espacement central (e) peut être de 0 (zéro) mètre. Le capteur de distance (14) pourrait être intégré dans l'actionneur de déplacement (5).

Afin de pouvoir faire varier la largeur de l'andain (17), le contrôleur (7) peut préférentiellement régler l'espacement central (e) continuellement, par exemple entre 0 et 4 mètres. Tel que représenté sur la figure 7, à chaque moteur hydraulique (6') peut être relié un distributeur (18) hydraulique à commande proportionnelle. Selon la réalisation préférée, le capteur de distance (14) permet de mesurer l'espacement central (e) entre les premier et deuxième convoyeurs (50, 60) et transmet au contrôleur (7) un signal proportionnel à l'espacement central (e). Alternativement ou additionnellement, la vitesse d'au moins un convoyeur (50, 60, 70, 80) peut être ajustée proportionnellement à l'espacement central (e) en configuration centrale. Par exemple, les vitesses des premier et deuxième convoyeurs (50, 60) peuvent être ajustées de telle sorte que plus l'espacement central (e) est important, plus les vitesses des premier et deuxième convoyeurs (50, 60) seront importantes, réduisant ainsi le risque de bourrage.

La machine (1) peut comporter un capteur de sens (15) associé à chaque convoyeur (50, 60, 70, 80) et apte à transmettre au contrôleur (7) un signal représentatif du sens (C1, C2) de convoyage de chaque convoyeur (50, 60, 70, 80). Préférentiellement, chaque capteur de sens (15) est intégré à la source motrice (6) associée au convoyeur (50, 60, 70, 80) respectif.

De préférence, le contrôleur (7) est apte à transmettre à chaque distributeur (18) un signal représentatif du sens (C1, C2) de convoyage souhaité et proportionnel à la vitesse souhaitée pour le convoyeur (50, 60, 70, 80) associé, ce qui permet d'automatiser de manière simple, économique et facilement modifiable, un réglage continu des vitesses des convoyeurs (50, 60, 70, 80).

De préférence, le contrôleur (7) peut régler le sens (C1, C2) de convoyage et la vitesse d'au moins un convoyeur (50, 60, 70, 80) en fonction du signal représentatif de la configuration des convoyeurs (50, 60, 70, 80). Alternativement ou additionnellement, le contrôleur (7) peut régler le sens (C1, C2) de convoyage et la vitesse de chaque convoyeur (50, 60, 70, 80) en fonction du signal représentatif de la configuration des convoyeurs (50, 60, 70, 80), respectivement en fonction de la configuration des convoyeurs (50, 60, 70, 80).

Selon une autre caractéristique intéressante, la vitesse de chaque convoyeur (50, 60, 70, 80) est automatiquement réglée proportionnellement à la vitesse d'avance de la machine (1), permettant d'adapter la vitesse des convoyeurs (50, 60, 70, 80) au débit de produit. En effet, plus la vitesse d'avance de la machine (1) est importante, plus le débit de produit est important et plus vite les convoyeurs (50, 60, 70, 80) doivent déplacer le produit pour éviter un bourrage. Ainsi, quelle que soit la configuration des convoyeurs (50, 60, 70, 80), la vitesse d'un convoyeur (50, 60, 70, 80) est proportionnelle à la vitesse d'avance de la machine (1). Grâce à cette automatisation, le confort de conduite est encore davantage amélioré.

Selon une caractéristique avantageuse, le contrôleur (7) peut comporter une mémoire. Lorsque le contrôleur (7) reçoit le signal représentatif de la vitesse d'avance de la machine (1), il peut comparer cette vitesse à une ou plusieurs valeurs enregistrées dans sa mémoire et régler la vitesse de chaque convoyeur (50, 60, 70, 80) en fonction de cette ou ces comparaison(s). Notamment, la vitesse de chaque convoyeur (50, 60, 70, 80) pourrait être réglée en fonction de différents paliers de la vitesse d'avance.

Le contrôleur (7) peut recevoir un signal représentatif de la vitesse d'avance de la machine (1). Le signal représentatif de la vitesse d'avance de la machine (1) peut être obtenu par au moins l'un entre un capteur (23) GPS, un capteur de vitesse monté sur la machine (1) et/ou un capteur de vitesse intégré au tracteur (8).

Il ressort que le contrôleur (7) est apte à recevoir un signal représentatif de la vitesse d'avance de la machine (1) et que le contrôleur (7) est apte à régler la vitesse d'au moins un convoyeur (50, 60, 70, 80) en fonction de cette vitesse d'avance. Préférentiellement, le contrôleur (7) est apte à recevoir un signal représentatif de la vitesse d'avance de la machine (1) et à régler la vitesse de chaque convoyeur (50, 60, 70, 80) en fonction de cette vitesse d'avance.

De manière préférentielle, la proportion de la vitesse de chaque convoyeur (50, 60, 70, 80) par rapport à la vitesse d'avance de la machine (1) peut être réglée, permettant une meilleure adaptabilité aux différentes conditions du produit et/ou aux préférences de l'utilisateur. Afin d'assurer le déplacement du produit même lorsque la vitesse d'avance de la machine (1) est nulle ou faible, le contrôleur (7) peut être configuré pour régler la vitesse de chaque convoyeur (50, 60, 70, 80) à une valeur minimale lorsque la vitesse d'avance de la machine (1) est inférieure à un seuil déterminé. De préférence, lorsque la vitesse d'avance de la machine (1) est inférieure à un seuil déterminé, le contrôleur (7) est configuré pour régler la vitesse de chaque convoyeur (50, 60, 70, 80) à une valeur égale à trente pour cent (30%) de sa vitesse maximale. Ce seuil déterminé pour la vitesse d'avance de la machine (1) peut par exemple être de 5km/h. Alternativement ou additionnellement, l'utilisateur peut régler une valeur minimale pour la vitesse de chaque convoyeur (50, 60, 70, 80) et/ou une proportion minimale entre la vitesse de chaque convoyeur (50, 60, 70, 80) et la vitesse d'avance de la machine (1). La valeur minimale de la vitesse de chaque convoyeur (50, 60, 70, 80) peut dépendre de la proportion entre la vitesse de chaque convoyeur (50, 60, 70, 80) et la vitesse d'avance de la machine (1). Ainsi, même si la machine (1) se déplace à une vitesse faible, la vitesse de chaque convoyeur (50, 60, 70, 80) reste supérieure à cette valeur minimale.

Afin d'éviter que le produit soit éjecté trop loin par chaque ou le convoyeur (50, 60, 70, 80), l'utilisateur peut également régler une valeur maximale pour la vitesse de chaque convoyeur (50, 60, 70, 80) et/ou une proportion maximale entre la vitesse de chaque convoyeur (50, 60, 70, 80) et la vitesse d'avance de la machine (1). Ainsi, même si la machine (1) se déplace à une vitesse élevée, la vitesse de chaque convoyeur (50, 60, 70, 80) reste inférieure à cette valeur maximale.

De préférence, chaque dispositif de transfert (4) est un rouleau de ramassage entrainé en rotation autour d'un axe de rouleau (16) respectif. Préférentiellement, chaque axe de rouleau (16) est parallèle à la direction de convoyage. Chaque rouleau de ramassage comporte des doigts répartis autour de sa périphérie et destinés à ramasser le produit au sol et à le transférer au convoyeur (50, 60, 70, 80) associé en le projetant vers l'arrière. Chaque rouleau de ramassage est préférentiellement entrainé autour de l'axe de rouleau (16) respectif par un moteur d'entrainement (9) respectif. Le moteur d'entrainement (9) peut notamment être hydraulique ou électrique. Chaque rouleau de ramassage pourrait cependant également être entrainé via la prise de force du tracteur (8).

De préférence, chaque dispositif de transfert (4) peut présenter une vitesse de transfert respective. Selon une caractéristique intéressante, le contrôleur (7) peut être configuré pour régler automatiquement la vitesse de chaque dispositif de transfert (4) en fonction de la vitesse du convoyeur (50, 60, 70, 80) associé. Cette caractéristique permet un plus grand confort de conduite, l'utilisateur devant régler encore un paramètre en moins à chaque changement de configuration des convoyeurs (50, 60, 70, 80), diminuant ainsi le risque d'erreur et/ou d'oubli de manipulation. En outre, l'utilisateur économise également le temps de ce réglage, permettant également d'accélérer le chantier agricole. Le fait d'adapter la vitesse des dispositifs de transfert (4) à la vitesse d'avance de la machine (1) permet en outre d'adapter leur vitesse au débit de produit à transférer. Notamment, le contrôleur (7) peut être configuré pour régler la vitesse de chaque dispositif de transfert (4) proportionnellement à la vitesse du convoyeur (50, 60, 70, 80) associé.

Dans la réalisation préférée des figures 1 et 2, la machine (1) ne comporte pas d'autres convoyeurs (50, 60, 70, 80) que le premier convoyeur (50) et le deuxième convoyeur (60). Dans la réalisation préférée, la machine (1) ne comporte pas de convoyeurs centraux (70, 80).

Alternativement, la machine (1) peut comporter au moins un convoyeur central (70, 80). Le ou chaque convoyeur central (70, 80) est situé entre les premier et deuxième convoyeurs (50,60) dans le mode de travail de la machine (1). Aussi, lorsque les convoyeurs (50, 60, 70, 80) sont placés dans la ou chaque configuration latérale, le contrôleur (7) est configuré pour régler automatiquement la vitesse de chaque convoyeur (50, 60, 70, 80), de sorte que plus le convoyeur (50, 60, 70, 80) est proche du convoyeur (50, 60, 70, 80) aval, plus sa vitesse est importante, permettant d'éviter les bourrages pour une machine (1) présentant plus de deux convoyeurs (50, 60, 70, 80). En effet, plus la machine (1) comporte de convoyeurs (50, 60, 70, 80), plus le risque de bourrage est important et ce particulièrement sur le convoyeur (50, 60, 70, 80) aval.

Selon une deuxième variante de réalisation représentée sur la figure 4, la machine (1) comporte un unique convoyeur central (70). Dans cette deuxième variante, le convoyeur central (70) est situé entre le premier convoyeur (50) et le deuxième convoyeur (60) en mode de travail. Selon cette deuxième variante de réalisation, dans la configuration centrale, afin que l'andain (17) puisse être déposé entre les premier et deuxième convoyeurs (50, 60), le convoyeur central (70) est escamoté. Selon cette variante, dans la configuration centrale, le convoyeur central (70) peut notamment être déplacé dans la position qu'il occupe en mode de manoeuvre de la machine (1). Alternativement, en configuration centrale, le convoyeur central (70) est totalement retiré de la machine (1). Selon la deuxième variante de réalisation, seuls les convoyeurs (50, 60, 70, 80) amont et aval peuvent être déplacés par rapport au châssis (2) suivant la direction de convoyage (C). Tel que représenté sur la figure 4, dans la configuration latérale gauche, le convoyeur (50, 60, 70, 80) aval est le premier convoyeur (50) et le convoyeur (50, 60, 70, 80) amont est le deuxième convoyeur (60).

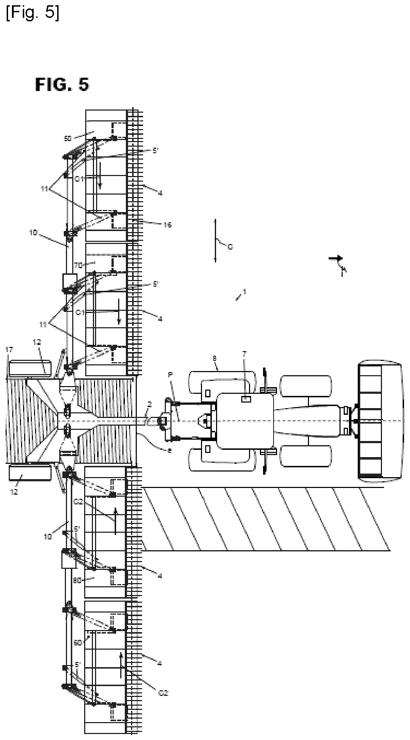

Selon une troisième variante de réalisation représentée sur la figure 5, la machine (1) comporte un premier convoyeur central (70) et un deuxième convoyeur central (80). Dans cette variante, chaque convoyeur central (70, 80) est situé entre le premier convoyeur (50) et le deuxième convoyeur (60) en mode de travail de la machine (1). Il est convenu que le premier convoyeur central (70) est situé entre le premier convoyeur (50) et le deuxième convoyeur central (80) suivant la direction de convoyage (C) et dans le mode de travail de la machine (1). Au moins selon la troisième variante de réalisation, dans la configuration centrale, les sens (C1, C2) de convoyage des convoyeurs (50, 60, 70, 80) situés du même côté du plan médian (P) sont identiques. De plus, selon cette troisième variante, dans la configuration centrale, le sens (C1, C2) de convoyage des convoyeurs (50, 60, 70, 80) situés d'un côté du plan médian (P) est opposé au sens (C1, C2) de convoyage des convoyeurs (50, 60, 70, 80) situés de l'autre côté du plan médian (P).

Dans la configuration centrale, les premier et deuxième convoyeurs (50, 60) sont décalés par rapport à leur position en configuration latérale. Selon la troisième variante de réalisation, les convoyeurs centraux (70, 80) peuvent aussi être déplacés sensiblement suivant la direction de convoyage (C). Selon la troisième variante de réalisation, dans la configuration centrale, chaque convoyeur (50, 60, 70, 80) est éloigné du plan médian (P) suivant la direction de convoyage (C) par rapport à sa position en configuration latérale. Selon la troisième variante de réalisation, le capteur de distance (14) permet de mesurer l'espacement central (e) entre les convoyeurs centraux (70, 80). Selon cette troisième variante, dans la configuration centrale, le premier convoyeur (50) est accolé au premier convoyeur central (70) et le deuxième convoyeur (60) est accolé au deuxième convoyeur central (80), afin de former un seul andain (17) entre les convoyeurs centraux (70, 80). Enfin, selon la troisième variante de réalisation, dans la configuration centrale des convoyeurs (50, 60, 70, 80), les sens (C1, C2) de convoyage des convoyeurs (50, 60, 70, 80) sont tels que le produit est déposé entre les convoyeurs centraux (70, 80).

Chaque changement de configuration des convoyeurs (50, 60, 70, 80) est assuré par l'actionneur de déplacement (5). A chaque convoyeur (50, 60, 70, 80) peut être associé au moins un vérin hydraulique (5') respectif. Dans la réalisation préférée, l'actionneur de déplacement (5) est réalisé par deux vérins hydrauliques (5'). L'actionneur de déplacement (5) pourrait cependant être réalisé par un unique vérin hydraulique (5') relié au premier convoyeur (50) et au deuxième convoyeur (60).

Ainsi que représenté sur la figure 4, chaque bras (10) peut comporter une première partie (10') du bras (10) reliée au convoyeur (50, 60, 70, 80) respectif et une deuxième partie (10") reliée au châssis (2). La première partie (10') peut être coulissée par rapport à la deuxième partie (10"), par exemple par un vérin hydraulique (5') respectif. Chaque bras (10) est alors préférentiellement télescopique.

Préférentiellement, chacun des convoyeurs (50, 60, 70, 80) est relié au bras (10) respectif par deux bielles de déport (11). Chaque bielle de déport (11) est avantageusement reliée à un convoyeur (50, 60, 70, 80) respectif et au bras (10) par une articulation respective autorisant un pivotement autour d'au moins un axe sensiblement vertical. De cette manière, le bras (10), chaque convoyeur (50, 60, 70, 80) et les deux bielles de déport (11) respectives forment un mécanisme à quatre barres dans un plan horizontal, autorisant le déplacement de chaque convoyeur (50, 60, 70, 80) suivant la direction de convoyage (C) par rapport au châssis (2). Grâce à ce mécanisme à quatre barres, chaque convoyeur (50, 60, 70, 80) peut être déplacé principalement suivant la direction de convoyage (C), mais également légèrement suivant le sens d'avance (A). L'emploi de bielles de déport (11) et d'un mécanisme à quatre barres permet notamment de réduire l'effort nécessaire aux déplacements des convoyeurs (50, 60, 70, 80) et implique une meilleure réparabilité de la machine (1). De plus, les mêmes bielles de déport (11) peuvent également permettre de guider le déplacement vertical des convoyeurs (50, 60, 70, 80). A cet effet, chaque articulation entre une bielle de déport (11) et le bras (10) respectif, ainsi que chaque articulation entre une bielle de déport (11) et le convoyeur (50, 60, 70, 80) respectif, autorise également un pivotement autour d'au moins un axe sensiblement horizontal, permettant avantageusement de placer les convoyeurs en configuration de manoeuvre et/ou de transport. De plus, en autorisant un pivotement dans un plan vertical de chaque convoyeur (50, 60, 70, 80) dans la ou chaque configuration latérale et centrale, les bielles de déport (11) permettent le suivi dynamique des dénivellations du sol, augmentant la qualité de travail tout en réduisant les dégâts au niveau du tapis végétal du sol.

Ainsi que représenté sur la figure 1, le châssis (2) peut être monté sur roues (12). Les roues (12) sont préférentiellement situées à l'arrière du châssis (2). En outre, chaque convoyeur (50, 60, 70, 80) peut reposer au sol via des patins (13). Alternativement ou additionnellement, chaque convoyeur (50, 60, 70, 80) peut reposer au sol via des roulettes. Telle que représentée, la machine (1) est préférentiellement destinée à être attelée à l'arrière du tracteur (8).

Préférentiellement, lorsque la machine (1) est transposée d'un mode à un autre, les convoyeurs (50, 60, 70, 80) ne sont pas déplacés par rapport au châssis (2) dans la direction de convoyage (C). De cette manière, lorsque la machine (1) est transposée depuis le mode de travail en mode de manoeuvre ou de transport, les convoyeurs (50, 60, 70, 80) retrouvent avantageusement la configuration dans laquelle ils étaient lors de leur dernier mode de travail. L'utilisateur n'a ainsi pas à s'occuper de régler à nouveau vitesses et sens (C1, C2) de convoyage des convoyeurs (50, 60, 70, 80). Alternativement, lorsque la machine (1) est transposée en mode de manoeuvre ou de transport, le contrôleur (7) pourrait enregistrer dans sa ou une mémoire, la dernière configuration dans laquelle étaient les convoyeurs (50, 60, 70, 80) en mode de travail, de sorte que lorsque la machine (1) est à nouveau transposée en mode de travail, le contrôleur (7) place automatiquement les convoyeurs (50, 60, 70, 80) dans cette dernière configuration, réglant ainsi automatiquement les vitesses et sens (C1, C2) des convoyeurs (50, 60, 70, 80) sans autre intervention de l'utilisateur.

Bien entendu, l'invention n'est pas limitée aux réalisations décrites et représentées aux dessins annexés, et déclinées en plusieurs variantes constructives. Des modifications restent possibles, notamment du point de vue de la constitution des divers éléments ou par substitution d'équivalents techniques, sans sortir pour autant du domaine de protection de l'invention.

## Revendications

1. Machine (1) agricole de fenaison destinée à être déplacée dans un sens d'avance (A) et comportant au moins deux convoyeurs (50, 60, 70, 80), chaque convoyeur (50, 60, 70, 80) étant configuré pour déplacer un produit dans une direction de convoyage (C) orientée transversalement au sens d'avance (A) dans un premier sens (C1) de convoyage ou un deuxième sens (C2) de convoyage et pouvant être entrainé à une vitesse respective, au moins un convoyeur (50, 60, 70, 80) pouvant être déplacé sensiblement suivant la direction de convoyage (C), de sorte que les convoyeurs (50, 60, 70, 80) peuvent être placés dans au moins une configuration latérale, dans laquelle tous les convoyeurs (50, 60, 70, 80) sont accolés, les sens (C1, C2) de convoyage de tous les convoyeurs (50, 60, 70, 80) sont identiques et le produit est déposé par un convoyeur (50, 60, 70, 80) aval, les convoyeurs (50, 60, 70, 80) pouvant également être placés dans une configuration centrale,
machine (1) **caractérisée en ce que**, lorsque les convoyeurs (50, 60, 70, 80) sont placés dans la ou chaque configuration latérale, la vitesse d'au moins un convoyeur (50, 60, 70, 80) est automatiquement réglée de sorte que la vitesse du convoyeur (50, 60, 70, 80) aval soit supérieure à celle du ou des autres convoyeurs (50, 60, 70, 80).

2. Machine selon la revendication 1, **caractérisée en ce que**, lorsque les convoyeurs (50, 60, 70, 80) sont placés dans la ou chaque configuration latérale, le sens de convoyage (C1, C2) d'au moins un des convoyeurs (50, 60, 70, 80) est automatiquement réglé de sorte que les sens de convoyage (C1, C2) de tous les convoyeurs (50, 60, 70, 80) soient identiques.

3. Machine selon la revendication 1 ou 2, **caractérisée en ce que** dans la configuration centrale, les convoyeurs (50, 60, 70, 80) les plus proches du plan médian (P) sont éloignés l'un de l'autre par un espacement central (e) et les sens (C1, C2) de convoyage des convoyeurs (50, 60, 70, 80) sont dirigés en direction du plan médian (P), et **en ce que** lorsque les convoyeurs (50, 60, 70, 80) sont placés dans la configuration centrale, au moins les vitesses des convoyeurs (50, 60, 70, 80) les plus proches du plan médian (P) sont automatiquement réglées à une valeur identique inférieure à la vitesse du convoyeur (50, 60) aval en configuration latérale.

4. Machine selon l'une des revendications 1 à 3, **caractérisée en ce que** lorsque les convoyeurs (50, 60, 70, 80) sont placés dans la configuration centrale, le sens de convoyage (C1, C2) d'au moins un des convoyeurs (50, 60, 70, 80) est automatiquement réglé de sorte que le sens de convoyage (C1, C2) de chacun des convoyeurs (50, 60, 70, 80) soit dirigé en direction du plan médian (P).

5. Machine selon l'une des revendications 2 à 4, **caractérisée en ce que** la machine (1) comporte un contrôleur (7) configuré pour régler automatiquement l'espacement central (e), ainsi que les sens (C1, C2) de convoyage et les vitesses des convoyeurs (50, 60, 70, 80), en fonction de leur configuration.

6. Machine selon l'une des revendications 2 à 5, **caractérisée en ce que** la machine (1) comporte un contrôleur (7) apte à recevoir un signal représentatif de la configuration des convoyeurs (50, 60, 70, 80) et, en fonction de ce signal, à régler le sens (C1, C2) de convoyage et la vitesse d'au moins un convoyeur (50, 60, 70, 80).

7. Machine selon la revendication 6, **caractérisée en ce que** le signal représentatif de la configuration des convoyeurs (50, 60, 70, 80) comprend un signal représentatif du sens (C1, C2) de convoyage de chaque convoyeur (50, 60, 70, 80) et un signal représentatif de l'espacement central (e).

8. Machine selon l'une quelconque des revendications 5 à 7, **caractérisée en ce que** le contrôleur (7) est apte à recevoir un signal représentatif de la vitesse d'avance de la machine (1) et à régler la vitesse d'au moins un convoyeur (50, 60, 70, 80) en fonction de cette vitesse d'avance.

9. Machine selon la revendication 8, **caractérisée en ce que** le contrôleur (7) peut être configuré pour régler la vitesse de chaque convoyeur (50, 60, 70, 80) à une valeur minimale, lorsque la vitesse d'avance de la machine (1) est inférieure à un seuil déterminé.

10. Machine selon l'une quelconque des revendications 5 à 9, **caractérisée en ce qu'**un dispositif de transfert (4) est associé à chaque convoyeur (50, 60, 70, 80), chaque dispositif de transfert (4) pouvant présenter une vitesse de transfert respective, et **en ce que** le contrôleur (7) peut être configuré pour régler automatiquement la vitesse de chaque dispositif de transfert (4) en fonction de la vitesse du convoyeur (50, 60, 70, 80) associé.

11. Machine selon l'une quelconque des revendications 5 à 10, **caractérisée en ce que**, lorsque les convoyeurs (50, 60, 70, 80) sont placés dans la ou chaque configuration latérale, le contrôleur (7) est configuré pour régler automatiquement la vitesse de chaque convoyeur (50, 60, 70, 80), de sorte que plus le convoyeur (50, 60, 70, 80) est proche du convoyeur (50, 60, 70, 80) aval, plus sa vitesse est importante.

12. Machine selon l'une quelconque des revendications 1 à 12, **caractérisée en ce que** la machine (1) peut occuper un mode de travail dans lequel les convoyeurs (50, 60, 70, 80) s'étendent sensiblement horizontalement et/ou parallèlement au sol et au moins un autre mode, et **en ce que** lorsque la machine (1) est transposée d'un mode à un autre, les convoyeurs (50, 60, 70, 80) ne sont pas déplacés par rapport au châssis (2) dans la direction de convoyage (C).
